# EUROPEAN PATENT APPLICATION

(11) **EP 1 725 005 A1**
(43) Date of publication of application: **22.11.2006**
(21) Application number: 06010166.4
(22) Date of filing: 17.05.2006
(51) Int. Cl.: H04M 1/725

(54) **Method for displaying special effects in image data and a portable terminal implementing the same**

(30) Priority: 17.05.2005 KR 20050041229
(71) Applicant: Samsung Electronics Co., Ltd., Suwon-si, Gyeonggi-Do (KR)
(72) Inventor: Nam, Seung-A, c/o Samsung Electronics Co. Ltd., Suwon-si, Gyeonggi-do (KR); Lee, Un-Kyong, c/o Samsung Electronics Co. , Ltd., Suwon-si, Gyenggi-do (KR)
(74) Representative: Lang, Johannes

(57) **Abstract**

A method and terminal for displaying image data including inserted animation data are provided, where at least two image data are selected, at least two animation data are selected, which are to be inserted into the selected image data, and the animation data overlaid on the image data and displaying the image data comprising the overlaid animation data. Further, at least two selected image data are displayed, forms of animation data are displayed, if a user selects animation effect, and the forms of selected animation data is displayed. overlaying The selected animation data is overlaid on the selected image data and the selected image data comprising the overlaid selected animation data are overlaid is displayed, if a user selects insert animation data. The image data comprising the overlaid animation data are overlaid is stored as an animation file, if a user stores the image data.

## Description

### BACKGROUND OF THE INVENTION

### 1. Field of the Invention

The present invention relates to a method for displaying special effects in image data and a portable terminal implementing the same. More particularly, the present invention relates to a method and a portable terminal for displaying image data into which animation data are inserted.

### 2. Description of the Related Art

Current potable communication terminals are directed to have a structure capable of transmitting high speed data, as well as the original voice communication function. The data which can be processed in portable terminals performing data communication include packet data and image data.

In addition, current potable terminals include a function for transmitting and receiving image data. Therefore, the current portable terminals store images received from a base station and transmit obtained images to a base station. Further, the portable terminals can include a camera module photographing images and a display unit for displaying image signals photographed by the camera module. A camera module can include a charge coupled device (CCD) or a complementary metal oxide semiconductor (CMOS) sensor, and the display unit can include a liquid crystal display (LCD). Further, there is a trend in which a device for photographing images becomes miniaturized gradually as the camera module becomes miniaturized. The portable terminals can display the photographed images as moving pictures or still pictures, and can transmit the image to a base station.

As desires of service providers and consumers for picture mails increase, the above-mentioned services are embodied currently and are expected to increase greatly in the future. Further, functions for editing images of the portable terminals by manipulation of users tend to increase greatly. For example, technologies for zooming in and out picture images stored in the portable terminals or synthesizing a plurality of picture images are embodied currently. Further, if various image effects can be inserted into image data to reedit the image data, various services can be provided to users.

### SUMMARY OF THE INVENTION

An aspect of exemplary embodiments of the present invention is to address at least the above problems and/or disadvantages and to provide at least the advantages described below. Accordingly, an aspect of exemplary embodiments of the present invention is to provide a method and a portable terminal for displaying image data into which image data are inserted.

An aspect of exemplary embodiments of the present invention provides a method and a portable terminal for displaying special effects in image data, where at least two image data are selected, at least two animation data are selected, which are to be inserted into the selected image data, and the animation data are overlaid to the image data and the image data including the overlaid animation data is displayed.
According to exemplary embodiments of the present invention, at least two selected image data are displayed, forms of animation data are displayed, if a user selects animation effect, the forms of selected animation data are displayed, the selected animation data are overlaid to the selected image data and the selected image data including the overlaid selected animation data are displayed, if a user selects insert animation data, and the image data including the overlaid animation data is stored as an animation file, if a user stores the image data.

### BRIEF DESCRIPTION OF THE DRAWINGS

The above and other objects, features, and advantages of certain exemplary embodiments of the present invention will be more apparent from the following detailed description taken in conjunction with the accompanying drawings, in which:
FIG. 1 is a block diagram for showing a structure of a portable terminal according to an exemplary embodiment of the present invention;
FIG. 2 is a flow chart for describing a method for displaying image data into which animation data is inserted in the portable terminal according to an exemplary embodiment of the present invention;
FIGs. 3(a) to 5(c') are views for explaining an overlaying process of image data and animation data of FIG. 2;
FIGs. 6A through 6F are views for explaining a process of FIG. 2; and
FIGs. 7A and 7B are views for showing forms of animation data of FIG. 2.

Throughout the drawings, the same reference numerals will be understood to refer to the same elements, features, and structures

### DETAILED DESCRIPTION OF EXEMPLARY EMBODIMENTS

The matters defined in the description such as a detailed construction and elements are provided to assist in a comprehensive understanding of the embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

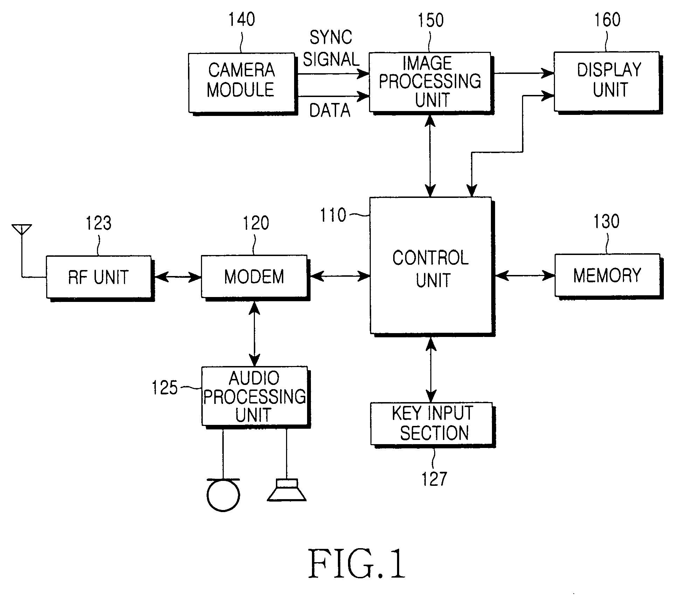

FIG. 1 is a block diagram for showing a structure of a portable terminal, according to an exemplary embodiment of the present invention, including a camera module. Referring to FIG. 1, an RF unit 123 performs a radio communication function of the portable terminal. The RF unit 123 includes an RF transmitter raising and amplifying the frequencies of transmitted signals, and an RF receiver amplifying received signals having low noise and performing downward conversion of the frequencies. A modem 120 includes a transmitter encoding and modulating the received signals, and a receiver demodulating and decoding the received signals. An audio processing unit 125 may include a codec, including a data codec processing packet data and an audio codec processing audio signals, such as, for example, a voice. The audio processing unit 125 converts digital audio signals received in the modem 120 to analog signals through the audio codec in order to reproduce the digital audio signals, or converts analog audio signals transmitted from the microphone to digital audio signals through the audio codec and transmits the digital audio signals to the modem 120. The codec can be separately included or can be provided in a control unit 110.

A memory 130 may include a program memory and a data memory. The program memory stores programs for controlling the general operations of the portable terminal. The program memory also stores programs for controlling the portable terminal to insert animation data into image data and display the image data, according to an exemplary embodiment of the present invention. The data memory temporarily stores data generated while performing the programs of the portable terminal. In addition, the memory 130 stores image data and animation data according to an exemplary embodiment of the present invention. The image data represent still images and moving images, which are photographed in a general manner and are continuously photographed. The animation data include image animation data and text animation data.

A control unit 110 controls the overall operations of the portable terminal. The control unit 110 may include the modem and the codec. According to an exemplary embodiment of the present invention, if insertion of animation data is selected, the control unit 110 controls the portable terminal to overlay at least two animation data on at least two selected image data and display the image data. Further, according to an exemplary embodiment of the present invention, if storing the image data is selected, the control unit 110 controls the portable terminal to store the image data including the inserted animation data as an animation file. According to an exemplary embodiment of the present invention, if the stored animation file is selected, the control unit 110 controls the portable terminal to display the image data including the inserted animation file, through a slide effect in which the image data are sequentially displayed by periods.

A camera module 140 photographs image data, and includes a camera sensor converting photographed optical signals to electrical signals and a signal processing section converting analog image signals photographed by the camera sensor to digital data. In an exemplary implementation, the camera sensor may include a CCD sensor, and the signal processing section may include a Digital Signal Processor (DSP). The camera sensor and the signal processing section may be included either integrally or separately.

An image processing unit 150 generates screen data for displaying and processing image signals output in the camera module 140 in a frame unit. The image processing unit 150 outputs the frame image data according to the characteristics and size of the display unit 160. The image processing unit 150 includes an image codec, and compresses the frame image data displayed in the display unit 160 in a predetermined manner or restores the compressed frame image data to the original frame image data. In an exemplary implementation, the image codec may be at least one of a JPEG codec, MPEG4 codec, Wavelet codec, and the like. The image processing unit 150 may include an On Screen Display (OSD)) function and outputs OSD data according to the size of the screen displayed under the control of the control unit 110.

The display unit 160 displays image signals output from the image processing unit 150 on the screen and user data output from the control unit 110. In an exemplary implementation, the display unit 160 may include a LCD. Accordingly, the display unit 160 may include a LCD controller, memory for storing image data, and a LCD device. If the LCD includes a touch screen, the LCD can also function as an input section. In addition, the display unit 160 displays image data including inserted animation data according to an exemplary embodiment of the present invention.

A key input section 127 includes keys for inputting number and letter information, and function keys for setting various functions.

The operation of inserting predetermined animation data into image data in the above described portable terminal will be described in detail.

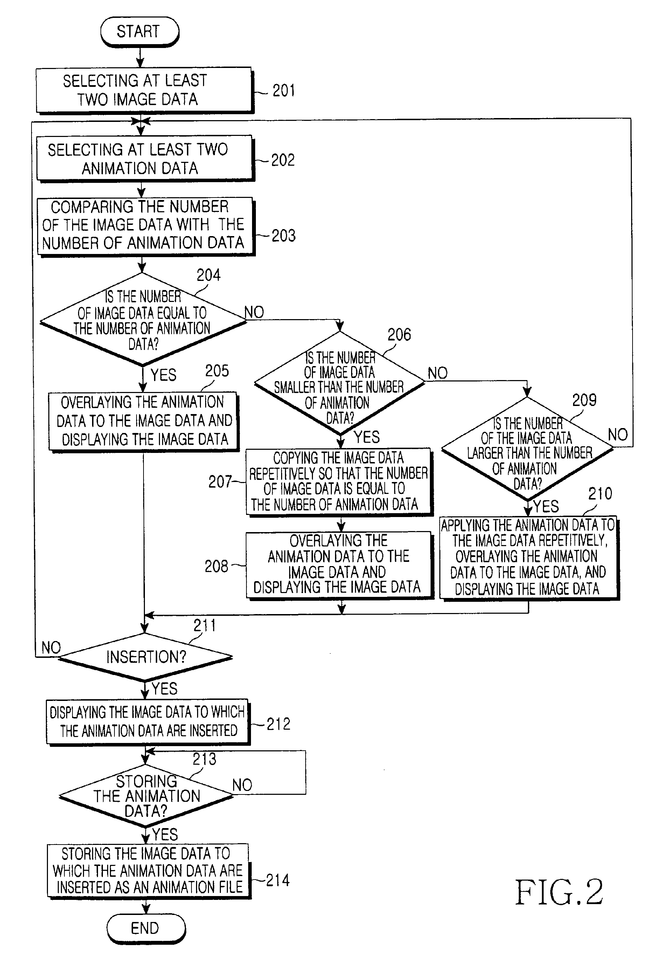

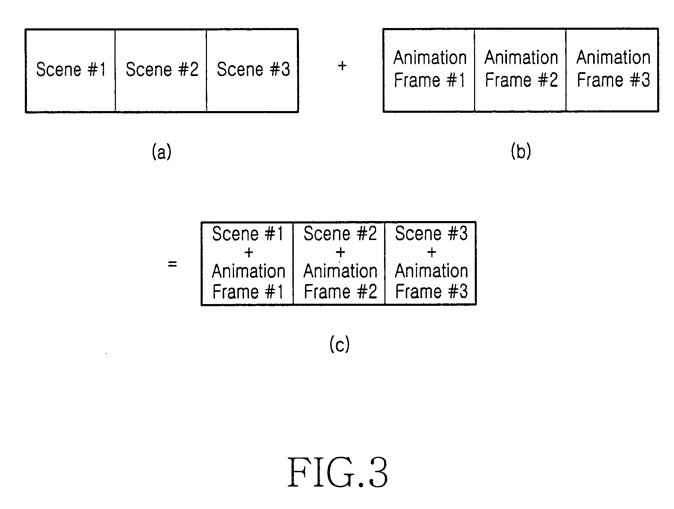

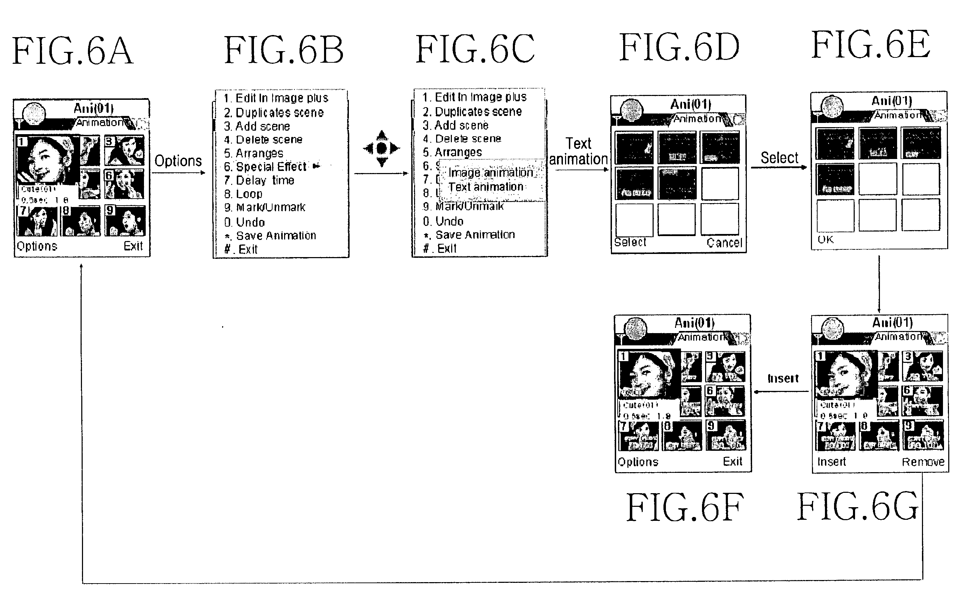

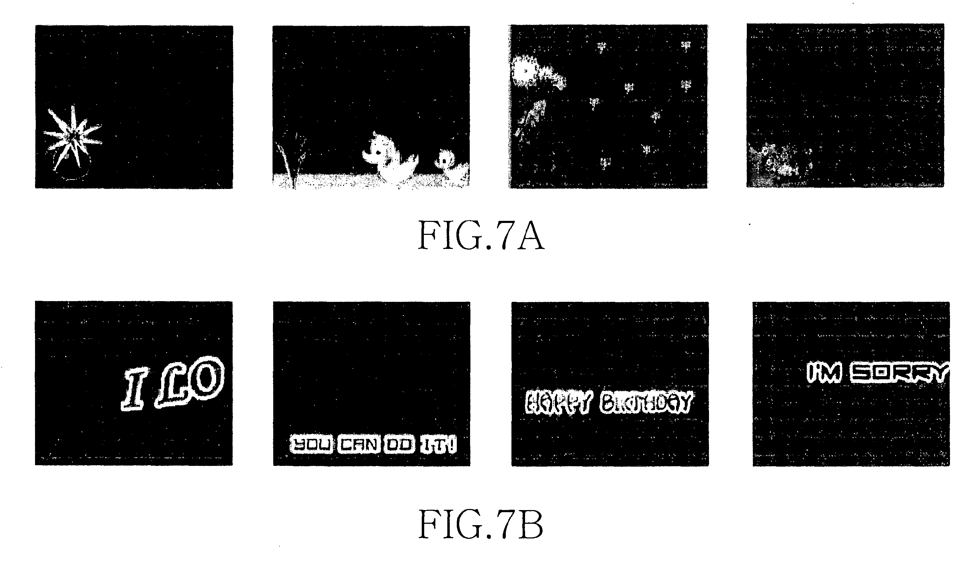

FIG. 2 is a flow chart for describing a method for displaying image data including inserted animation data in the portable terminal according to an exemplary embodiment of the present invention. FIGs. 3(a) to 5(c') are views for explaining an overlaying process of image data and animation data of FIG. 2. FIG. 6 is a view for explaining a process of FIG. 2, and FIG. 7 is a view for showing forms of animation data of FIG. 2.

Accordingly, exemplary embodiments of the present invention will be described in detail with reference to FIG. 1.

Referring to FIG. 2, if a user of the portable terminal selects at least two of the image data stored in the memory 130 in step 201, the control unit 110 detects the selection and displays the selected image data in the display unit 160.

With the selected image data being displayed, if a user selects an animation effect, the control unit 110 detects the selection and displays the forms of animation data. On the other hand, if a user selects image animation data in the forms of the animation data, the control unit 110 detects the selection and controls the display unit 160 to display the forms of the image animation data. Further, if a user selects text animation data in the forms of the animation data, the control unit 110 detects the selection and controls the display unit 160 to display the forms of the text animation data.

If a user selects at least two animation data in the forms of the image animation data and the text animation data in step 202, the control unit 110 detects the selection and proceeds with step 203 in which the number of image data selected in step 201 is compared with the number of animation data selected in step 202.

After the comparison, if the number of image data is equal to the number of animation data, the control unit 110 detects the comparison result in step 204 and proceeds with step 205 in which the animation data is overlaid on the corresponding image data, and the animation data and image data are displayed.

In an exemplary implementation, step 205 will be described with reference to FIG. 3. If at least three image data (Scene #1, Scene #2, and Scene #3), as shown in FIG. 3A, are selected in step 201 and three animation data (Animation Frame #1, Animation Frame #2, and Animation Frame #3), as shown in FIG. 3B, are selected in step 202, the control unit 110 controls the portable tenninal to apply and overlay the three animation data to the corresponding image data and display the image data, as shown in FIGs. 3A through 3C.

In FIGs. 3A through 3C, the three animation data are overlaid to the corresponding image data according to the order in which the image data and the animation data are selected. However, the three animation data may also be overlaid to the corresponding image data by designation of a user or at random.

In addition, the three animation data can be applied to one of the image data and can be displayed sequentially by periods. Then, each of the three image data can display the three animation data sequentially by periods and the display sequences may be determined differently from each other.

Further, after the comparison of the numbers of the image data and the animation data, if the number of image data is smaller than the number of animation data, the control unit 110 detects the comparison result in step 206 and proceeds with step 207 in which the image data are repetitively copied so that the number of animation data becomes equal to the number of image data.

If the number of animation data becomes equal to the number of image data after performing step 207, the control unit 110 detects the comparison result and proceeds with step 208 in which the animation data are overlaid to the image data.

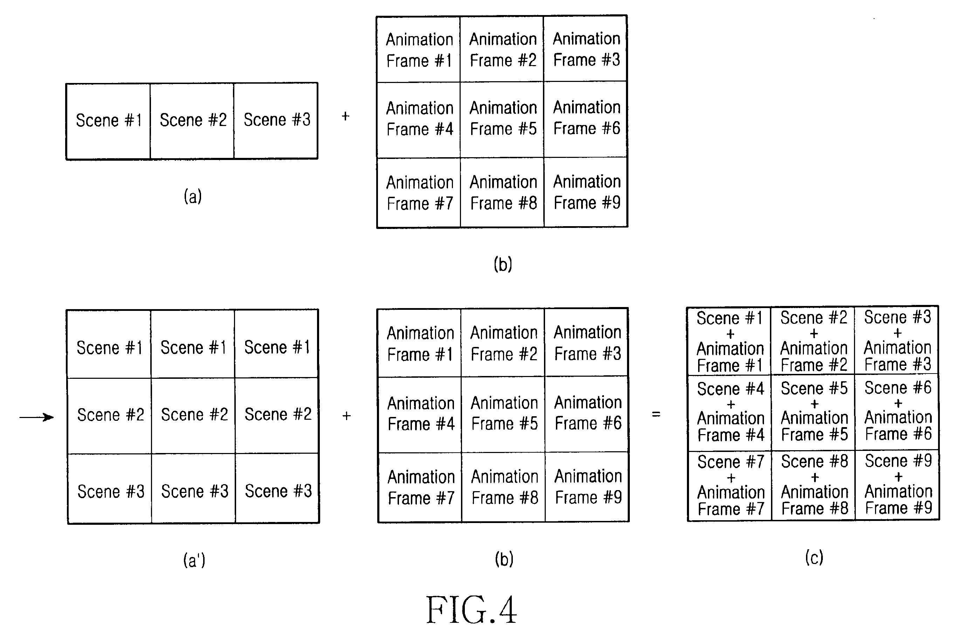

In an exemplary implementation, steps 207 and 208 will be described with reference to FIGs. 4A through 4C. If three image data (Scene #1, Scene #2, and Scene #3), as shown in FIG. 4A, are selected in step 201 and nine animation data (Animation Frame #1, Animation Frame #2, Animation Frame #3, Animation Frame #4, Animation Frame #5, Animation Frame #6, Animation Frame #7, Animation Frame #8, and Animation Frame #9), as shown in FIG. 4(b), are selected in step 202, the control unit 110 proceeds with step 207 in which the three image data are repetitively copied to become nine image data, as shown in FIG. 4(a'). Since the three image data (Scene #1, Scene #2, and Scene #3) are copied twice to make the nine image data in an exemplary embodiment of the present invention, as shown in FIG. 4(a'), the image data which are objects of repetitive copies may be selected by a user or at random.

The control unit 110, which has detected the nine image data and the nine animation data in step 207, proceeds with step 208 in which the control unit 110 controls the portable terminal to apply and overlay the nine animation data to the corresponding image data and display the image data, as shown in FIG. 4C.

In FIG. 4(c), the nine animation data are overlaid to the corresponding nine image data according to the order in which the image data and the animation data are selected. However, the nine animation data may also be overlaid to the corresponding image data by designation of a user or at random.

In addition, the nine animation data can be applied to one of the image data and can be displayed sequentially by periods. Then, each of the nine image data can display the nine animation data sequentially by periods and the display sequences may be determined different from each other.

Further, after the comparison of the numbers of image data and animation data, if the number of image data is larger than the number of animation data, the control unit 110 detects the comparison result in step 209 and proceeds with step 210 in which the control unit 110 repetitively applies the animation data to the image data and then displays the image data.

If the number of animation data becomes equal to the number of image data after repetitively copying the animation data, the control unit 110 may overlay the animation data to the image data and then display the image data.

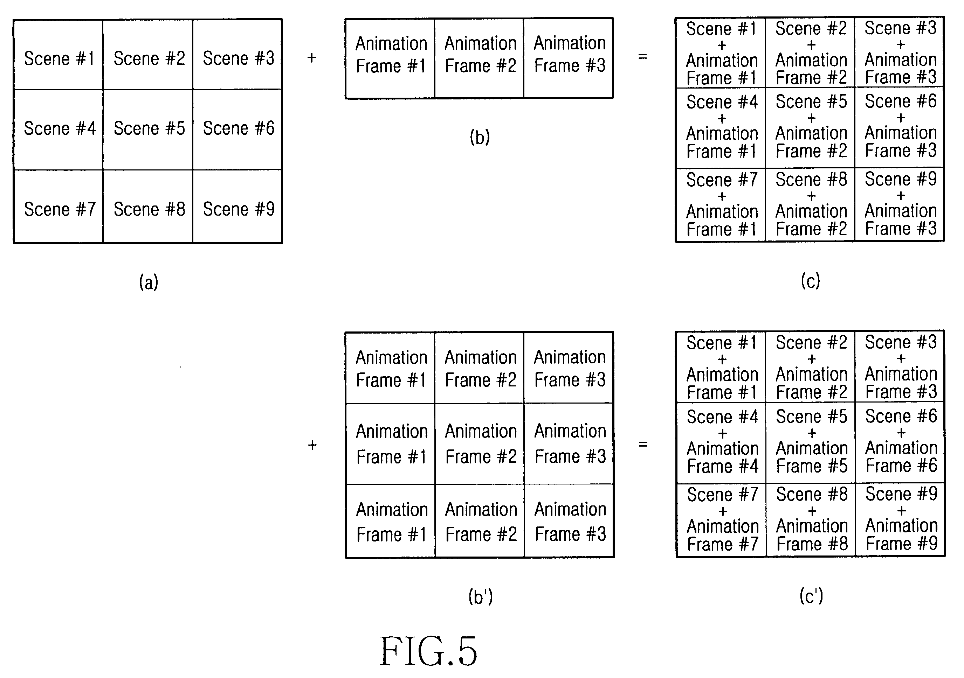

In an exemplary implementation, step 210 will be described with reference to FIG. 5. If nine image data (Scene #1, Scene #2, Scene #3, Scene #4, Scene #5, Scene #6, Scene #7, Scene #8, and Scene #9), as shown in FIG. 5(a), are selected in step 201 and three animation data (Animation Frame #1, Animation Frame #2, and Animation Frame #3), as shown in FIG. 5(b), are selected in step 202, the control unit 110 controls the portable terminal to repetitively apply and overlay the three animation data three times to the nine image data, as shown in FIG. 4(c).
Although the three animation data (Animation Frame #1, Animation Frame #2, and Animation Frame #3) are repetitively applied to the nine image data three times in a selected order in FIG. 4(c), the animation data, which are the objects of repetitive applications, may be selected by a user or at random.

Further, in FIG. 4(c), the three animation data are repetitively applied and overlaid to the nine image data to be displayed, according to the selected order. However, the three animation data are also repetitively applied and overlaid to the nine image data to be displayed by designation of a user or at random.

Further, the three animation data can be applied to at least one of the image data and displayed sequentially by periods. Then, each of the nine image data can display the three animation data sequentially by periods and the display sequences may be determined differently from each other.

In an exemplary implementation, the operation of overlaying the animation data to the image data by repetitively copying the image data and displaying the image data will be described with reference to FIG. 5. If nine image data (Scene #1, Scene #2, Scene #3, Scene #4, Scene #5, Scene #6, Scene #7, Scene #8 and Scene #9) are selected, as shown in FIG. 5(a) in step 201 and three animation data (Animation Frame #1, Animation Frame #2, and Animation Frame #3) are selected, as shown in FIG. 5(b) in step 202, the control unit 110 creates nine animation data by repetitively copying the three animation data.

Although the nine animation data are created by repetitively copying the three image data (Animation Frame #1, Animation Frame #2, and Animation Frame #3) twice in FIG. 4(b'), the image data which are objects of repetitive copies may be selected by a user or at random.

The control unit 110, which has detected the nine image data and the nine animation data, controls the portable terminal to apply and overlay the nine animation data to the nine corresponding image data one by one and to display the image data, as shown FIG. 4(c').

In FIG. 4(c'), the nine animation data are overlaid to the nine image data and are displayed according to the selected order of the image data and the animation data. However, the nine animation data can be overlaid to the nine image data and can also be displayed by designation of a user or at random.

Further, the nine animation data can be applied to at least one of the image data and displayed sequentially by periods. Then, each of the nine image data can display the nine animation data sequentially by periods and the display sequences may be determined differently from each other.

When the animation data selected in step 202 are overlaid to the image data selected in step 201 and displayed through steps 205, 208, and 210, if a user selects insertion of animation data, the control unit 110 detects the selection in step 211 and proceeds with step 213 in which the animation data are inserted into the image data and are displayed.

If a user selects stores the animation data in step 213, the control unit 110 detects the selection in step 213 and proceeds with step 214 in which the image data comprising the inserted animation data and displayed in step 212, are stored in an animation file.

If a user selects the stored animation file in step 214, the control unit 110 detects the selection and controls the portable terminal to display slide effects in which the image data comprising the inserted animation data are displayed sequentially by periods.

In an exemplary implementation, the process of FIG. 2 will be described with reference to FIGs. 6A through 6F. If a user selects "Option" in FIG. 6A displaying nine image data selected by a user, the control unit 110 detects the selection and displays a menu, as shown in FIG. 6B.

If a user selects "Special effect for animation effect" in the menu of FIG. 6B, the control unit 110 detects the selection and displays "Image animation" and "Text animation", which are forms of the special effects, as shown in FIG. 6B.

On the other hand, if a user selects "Image animation" in FIG. 6C, the forms of animation data, as shown in FIG. 7A, are displayed. Further, if a user selects "Text animation" in FIG. 6C, the control unit 110 detects the selection and control the display unit 160 to display the forms of the text animation data, as shown in FIG. 6D. FIG. 7B represents the forms of the text animation data.

If a user selects at least one of the forms of the text animation data displayed in FIG. 6D, the control unit 110 detects the selection and displays the forms of the selected text animation data, as shown in FIG. 6E.

On the other hand, if a user selects "Confirm" in FIG. 6E, the control unit 110 detects the selection and displays the image data of FIG. 6A comprising the inserted animation data of FIG. 6E.

Further, if a user selects "Insert animation data" in FIG. 6F, the control unit 110 detects the selection and controls the portable terminal to display the final image data comprising the inserted animation data of FIG. 6E.

Therefore, according to exemplary embodiments of the present invention, since image data comprising inserted animation data can be displayed, the image data can be edited variously.

While the invention has been shown and described with reference to certain exemplary embodiments thereof, it will be understood by those skilled in the art that various changes in form and details may be made therein without departing from the spirit and scope of the invention as defined by the appended claims.

## Claims

1. A method for displaying special effects in image data, the method comprising:
selecting at least two image data;
selecting at least two animation data, which are to be inserted into the selected image data; and
overlaying the animation data and the image data and displaying the image data comprising the overlaid animation data.

2. A method according to claim 1, further comprising storing the image data comprising the overlaid animation data, as an animation file.

3. A method according to claim 1, wherein the image data comprises continuously photographed image data.

4. A method according to claim 1, wherein the animation data comprises image animation data and text animation data.

5. A method according to claim 1, wherein the overlaying of the animation data and the image data comprises:
comparing a number of image data with a number of animation data;
overlaying the animation data and the corresponding image data, if the number of the image data is equal to the number of the animation data;
if the number of image data is smaller than the number of animation data, copying the image data repetitively so that the number of image data is equal to the number of animation data, and overlaying the animation data and the corresponding image data when the number of the image data is equal to the number of the animation data,; and
if the number of image data is larger than the number of animation data, applying the animation data and the image data repetitively, overlaying the animation data and the image data, and displaying the image data comprising the overlaid animation data,.

6. A method according to claim 5, wherein, if the number of image data is larger than the number of the animation data, the animation data are repetitively copied so that the number of animation data is equal to the number of image data, the animation data and the corresponding image data are overlaid, and the image data comprising the overlaid animation data are overlaid are displayed.

7. A method according to claim 5, wherein the animation data and the image data are overlaid according to at least one of a selected order and at random.

8. A method for displaying special effects in image data, the method comprising:
displaying at least two selected image data;
displaying forms of animation data;
displaying the form of selected animation data;
overlaying the selected animation data and the selected image data and displaying the selected image data comprising the overlaid selected animation data, if the animation data is selected; and
storing the image data comprising the overlaid animation data as an animation file.

9. A method according to claim 8, further comprising displaying the image data to which the animation data are overlaid sequentially by periods, if a stored animation file is selected.

10. A method according to claim 8, wherein the displaying of the form of the selected animation data comprises:
displaying the form of image animation data, if the image animation data comprising the forms of animation data is selected; and
displaying the form of text animation data, if the text animation data comprising the forms of animation data is selected;

11. A method according to claim 8, wherein the overlaying of the selected animation data and the selected image data and displaying the image data comprises:
comparing a number of image data with a number of animation data;
overlaying the animation data and the corresponding image data, if the number of the image data is equal to the number of the animation data;
if the number of image data is smaller than the number of animation data, copying the image data repetitively so that the number of the image data is equal to the number of animation data, and overlaying the animation data and the corresponding image data when the number of the image data is equal to the number of the animation data,; and
applying the animation data to the image data repetitively or copying the animation data repetitively so that the number of animation data is equal to the number of image data, overlaying the animation data and the image data, and displaying the image data comprising the overlaid animation data.

12. A method according to claim 8, wherein the animation data and the image data are overlaid according to at least one of a selected order and at random.

13. A terminal comprising:
a display; and
an image processing unit,
wherein, when at least two image data and at least two animation data, which are to be inserted into the image data, are selected, the image processing unit overlays the animation data and the image data, and the display displays the image data comprising the overlaid animation data.
